# EUROPEAN PATENT APPLICATION

(11) **EP 4 579 418 A1**
(43) Date of publication of application: **02.07.2025**
(21) Application number: 24742815.4
(22) Date of filing: 12.07.2024
(51) Int. Cl.: G06F 3/0484, G06F 3/0481, H04M 1/72454

(54) **METHOD AND DEVICE FOR DISPLAYING EXECUTION SCREEN OF APPLICATION ACCORDING TO FOLDING ANGLE**

(30) Priority: 24.11.2023 KR 20230165450; 30.10.2023 KR 20230146702
(71) Applicant: Samsung Electronics Co., Ltd, Suwon-si, Gyeonggi-do 16677 (KR)
(72) Inventor: SOHN, Soomin, Suwon-si, Gyeonggi-do 16677 (KR); HWANG, Sooji, Suwon-si, Gyeonggi-do 16677 (KR)
(74) Representative: Appleyard Lees IP LLP
(86) International application number: PCT/KR2024/010007
(87) International publication number: WO 2025/095273

(57) **Abstract**

An electronic device includes a foldable display, a processor, and a memory configured to store instructions, wherein the instructions, when executed by the processor, cause the electronic device to display an execution screen of a first application when a folding angle of the foldable display is a first angle, output a notification for a second application when displaying the execution screen of the first application, display an execution screen of the second application associated with the notification in a second area of the foldable display, based on the folding angle of the foldable display changing from the first angle to a second angle when outputting the notification, display the execution screen of the first application in a first area, different from the second area, of the foldable display, and perform a function of the second application based on the folding angle changing from the second angle to a third angle.

## Description

### BACKGROUND

### 1. Field

Technologies for displaying an execution screen of an application are disclosed.

### 2. Description of Related Art

Development of electronic technology has accelerated the development and distribution of various types of electronic products. For example, electronic devices that can change shapes have been developed. Such electronic devices include, for example, foldable electronic devices.

### SUMMARY

An electronic device is provided, comprising: a foldable display, a processor, and a memory configured to store instructions, wherein the instructions, when executed by the processor, may cause the electronic device to display an execution screen of a first application when a folding angle of the foldable display is a first angle, output a notification for a second application when displaying the execution screen of the first application, display an execution screen of the second application associated with the notification in a second area of the foldable display, based on the folding angle of the foldable display changing from the first angle to a second angle when outputting the notification, display the execution screen of the first application in a first area, different from the second area, of the foldable display, and perform a function of the second application based on the folding angle changing from the second angle to a third angle.

A method is provided, performed by an electronic device, comprising: displaying an execution screen of a first application when a folding angle of a foldable display is a first angle; outputting a notification for a second application when displaying the execution screen of the first application; displaying an execution screen of the second application associated with the notification in a second area of the foldable display, based on the folding angle of the foldable display changing from the first angle to a second angle when outputting the notification; displaying the execution screen of the first application in a first area, different from the second area, of the foldable display; and performing a function of the second application based on the folding angle changing from the second angle to a third angle.

### BRIEF DESCRIPTION OF THE DRAWINGS

The above and other aspects, features, and advantages will be more apparent from the following description, taken in conjunction with the accompanying drawings, in which:
FIG. 1 is a block diagram of an electronic device in a network environment;
FIG. 2A is a diagram illustrating an unfolded state of an electronic device;
FIG. 2B is a diagram illustrating a folded state of an electronic device;
FIG. 2C is a perspective view illustrating an example of a fully unfolded state of an electronic device;
FIG. 2D is a perspective view illustrating an example of a partially unfolded intermediate state of an electronic device;
FIGS. 3A, 3B, 3C, and 3D are views illustrating a fully unfolded state, partially unfolded intermediate states, and a fully folded state of an electronic device;
FIG. 4 illustrates an example of a method of displaying an execution screen of an application by an electronic device;
FIG. 5A is a diagram illustrating an example of an operation of displaying execution screens of a first application and a second application as the folding angle of an electronic device decreases;
FIG. 5B is a diagram illustrating an example of an operation of displaying execution screens of a first application and a second application as the folding angle of an electronic device increases;
FIG. 6 is a diagram illustrating an operation of displaying an execution screen of an application when the folding angle of an electronic device changes to a first angle;
FIG. 7 is a diagram illustrating an operation of displaying an execution screen of an application when the folding angle of an electronic device changes to a fourth angle;
FIG. 8 is a diagram illustrating an operation of displaying an execution screen of an application by an electronic device when an additional notification for a third application is output;
FIG. 9 is a diagram illustrating an example of an operation of displaying an execution screen of a second application through a window by an electronic device;
FIG. 10 is a diagram illustrating an example of an operation of displaying an execution screen of an application by an electronic device in response to a change in the folding angle when a notification for a second application is output while displaying execution screens of a plurality of applications; and
FIG. 11 is a block diagram of an electronic.

### DETAILED DESCRIPTION

Hereinafter, embodiments will be described in detail with reference to the accompanying drawings. When describing the embodiments with reference to the accompanying drawings, like reference numerals refer to like components, and redundant repetitious description is omitted.

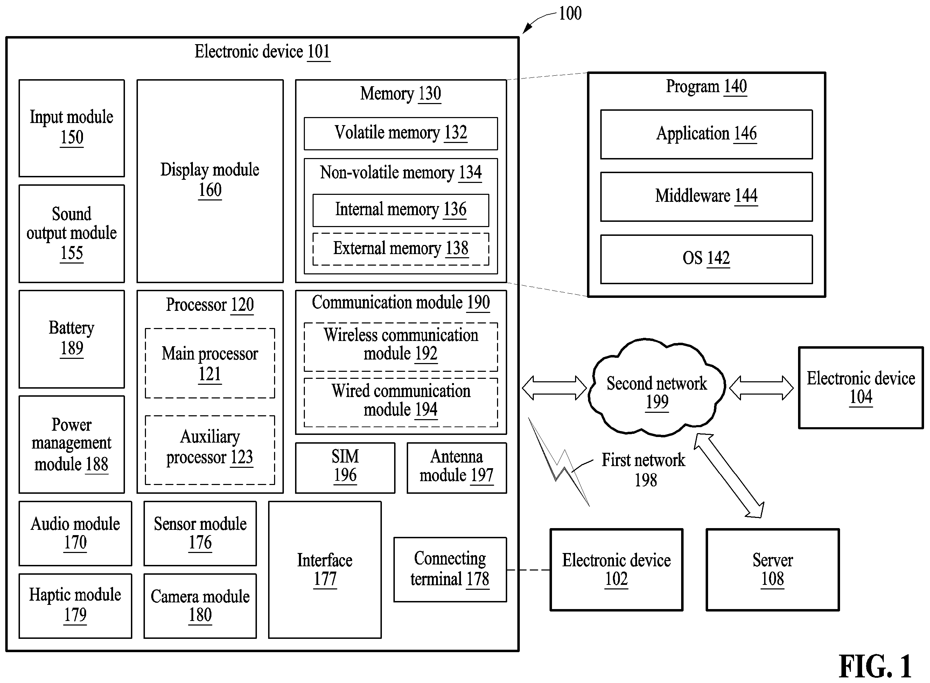

FIG. 1 is a block diagram of an electronic device in a network environment.

Referring to FIG. 1, the electronic device 101 in the network environment 100 is configured to communicate with an electronic device 102 via a first network 198 (e.g., a short-range wireless communication network), or communicate with at least one of an electronic device 104 or a server 108 via a second network 199 (e.g., a long-range wireless communication network). The electronic device 101 is configured to communicate with the electronic device 104 via the server 108. The electronic device 101 includes a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. **In** some embodiments, at least one of the components (e.g., the connecting terminal 178) may be omitted from the electronic device 101, or one or more other components may be added in the electronic device 101. **In** some embodiments, some of the components (e.g., the sensor module 176, the camera module 180, or the antenna module 197) may be implemented as a single component (e.g., integrated with the display module 160).

The processor 120 is configured to execute, for example, software (e.g., a program 140) to control at least one other component (e.g., a hardware or software component) of the electronic device 101 coupled with the processor 120, and is configured to perform various data processing or computation. As at least part of the data processing or computation, the processor 120 is configured to store a command or data received from another component (e.g., the sensor module 176 or the communication module 190) in volatile memory 132, process the command or the data stored in the volatile memory 132, and store resulting data in non-volatile memory 134. The processor 120 includes a main processor 121 (e.g., a central processing unit or an application processor) or an auxiliary processor 123 (e.g., a graphics processing unit, a neural processing unit, an image signal processor, a sensor hub processor, or a communication processor) that is operable independently from, or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an image signal processor or a communication processor) may be implemented as part of another component (e.g., the camera module 180 or the communication module 190) functionally related to the auxiliary processor 123. The auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed, or via a separate server (e.g., the server 108). Learning algorithms includes, e.g., supervised learning, unsupervised learning, semi-supervised learning, or reinforcement learning. The artificial intelligence model includes a plurality of artificial neural network layers. The artificial neural network may be a deep neural network, a convolutional neural network, a recurrent neural network, a restricted Boltzmann machine, a deep belief network, a bidirectional recurrent deep neural network, deep Q-network, or a combination of two or more thereof, but is not limited thereto. The artificial intelligence model may, additionally or alternatively, include a software structure different to, or as an alternative to the hardware structure.

The memory 130 is configured to store various pieces of data used by at least one component (e.g., the processor 120 or the sensor module 176) of the electronic device 101. The various pieces of data includes, for example, software (e.g., the program 140) and input data or output data for a command related thereto. The memory 130 includes the volatile memory 132 or the non-volatile memory 134.

The program 140 may be stored as software in the memory 130, and includes, for example, an operating system 142, middleware 144, or an application 146.

The input module 150 is configured to receive a command or data to be used by another component (e.g., the processor 120) of the electronic device 101, from the outside (e.g., a user) of the electronic device 101. The input module 150 includes, for example, a microphone, a mouse, a keyboard, a key (e.g., a button), or a digital pen (e.g., a stylus pen).

The sound output module 155 is configured to output sound signals to the outside of the electronic device 101. The sound output module 155 includes, for example, a speaker or a receiver. The speaker may be used for general purposes, such as playing multimedia or playing a record. The receiver may be used for receiving incoming calls. The receiver may be implemented as separate from, or as part of the speaker.

The display module 160 is configured to visually provide information to the outside (e.g., a user) of the electronic device 101. The display module 160 includes, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 is configured to convert a sound into an electrical signal and vice versa. The audio module 170 may obtain the sound via the input module 150 or output the sound via the sound output module 155 or an external electronic device (e.g., an electronic device 102 such as a speaker or a headphone) directly or wirelessly coupled with the electronic device 101.

The sensor module 176 is configured to detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 177 is configured to support one or more specified protocols to be used for the electronic device 101 to be coupled with the external electronic device (e.g., the electronic device 102) directly (e.g., via a wired connection) or wirelessly. The interface 177 may comprise, for example, a high-definition multimedia interface (HDMI), a universal serial bus (USB) interface, a secure digital (SD) card interface, or an audio interface.

The connecting terminal 178 includes a connector via which the electronic device 101 may be physically connected to an external electronic device (e.g., the electronic device 102). The connecting terminal 178 may comprise, for example, an HDMI connector, a USB connector, an SD card connector, or an audio connector (e.g., a headphone connector).

The haptic module 179 is configured to convert an electrical signal into a mechanical stimulus (e.g., a vibration or a movement) or electrical stimulus which may be recognized by a user via his tactile sensation or kinesthetic sensation. The haptic module 179 may comprise, for example, a motor, a piezoelectric element, or an electric stimulator.

The camera module 180 is configured to capture a still image and a video. The camera module 180 may comprise one or more lenses, image sensors, image signal processors, or flashes.

The power management module 188 is configured to manage power supplied to the electronic device 101. The power management module 188 may be implemented as at least part of, for example, a power management integrated circuit.

The battery 189 is configured to supply power to at least one component of the electronic device 101. The battery 189 may comprise, for example, a primary cell which is not rechargeable, a secondary cell which is rechargeable, or a fuel cell.

The communication module 190 is configured to support establishment of a direct (e.g., wired) communication channel or a wireless communication channel between the electronic device 101 and the external electronic device (e.g., the electronic device 102, the electronic device 104, or the server 108) and perform communication via the established communication channel. The communication module 190 may comprise one or more communication processors that are operable independently from the processor 120 (e.g., the application processor) and support direct (e.g., wired) communication or wireless communication. The communication module 190 may comprise a wireless communication module 192 (e.g., a cellular communication module, a short-range wireless communication module, or a global navigation satellite system communication module) or a wired communication module 194 (e.g., a local area network (LAN) communication module, or a power line communication module). A corresponding one of these communication modules may communicate with the external electronic device 104 via the first network 198 (e.g., a short-range communication network, such as Bluetooth^{™}, wireless-fidelity (Wi-Fi) direct, or infrared data association ) or the second network 199 (e.g., a long-range communication network, such as a legacy cellular network, a 5G network, a next-generation communication network, the Internet, or a computer network (e.g., a LAN or a wide area network)). These various types of communication modules may be implemented as a single component (e.g., a single chip), or may be implemented as multiple components (e.g., multiple chips) separate from each other. The wireless communication module 192 is configured to identify and authenticate the electronic device 101 in a communication network, such as the first network 198 or the second network 199, for example using subscriber information (e.g., international mobile subscriber identity) stored in the subscriber identification module 196.

The wireless communication module 192 may support a 5G network, that is a network developed after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO, an array antenna, analog beamforming, or a large-scale antenna. The wireless communication module 192 is configured to support various requirements specified in the electronic device 101, an external electronic device (e.g., the electronic device 104), or a network system (e.g., the second network 199). The wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink and uplink, or a round trip of 1 ms or less) for implementing URLLC.

The antenna module 197 is configured to transmit or receive a signal or power to or from the outside (e.g., the external electronic device) of the electronic device 101. The antenna module 197 may comprise an antenna including a radiating element including a conductive material or a conductive pattern formed in or on a substrate (e.g., a printed circuit board (PCB)). The antenna module 197 may comprise a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. Another component (e.g., a radio frequency integrated circuit (RFIC)) other than the radiating element may be additionally formed as part of the antenna module 197.

For example, the antenna module 197 may comprise a mmWave antenna module. The mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output, serial peripheral interface, or mobile industry processor interface).

Commands or data may be transmitted or received between the electronic device 101 and the external electronic device 104 via the server 108 coupled with the second network 199. Each of the external electronic devices 102 and 104 may be a device of a same type as, or a different type from, the electronic device 101. All or some of operations to be executed at the electronic device 101 may be executed at one or more of the external electronic devices 102 and 104 or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing, or client-server computing technology may be used, for example. The electronic device 101 may provide ultra low-latency services using, e.g., distributed computing or mobile edge computing. **In** another embodiment, the external electronic device 104 includes an Internet-of-things (IoT) device. The server 108 may be an intelligent server using machine learning and/or a neural network. The external electronic device 104 or the server 108 may be included in the second network 199. The electronic device 101 may be applied to intelligent services (e.g., smart home, smart city, smart car, or healthcare) based on 5G communication technology or IoT-related technology.

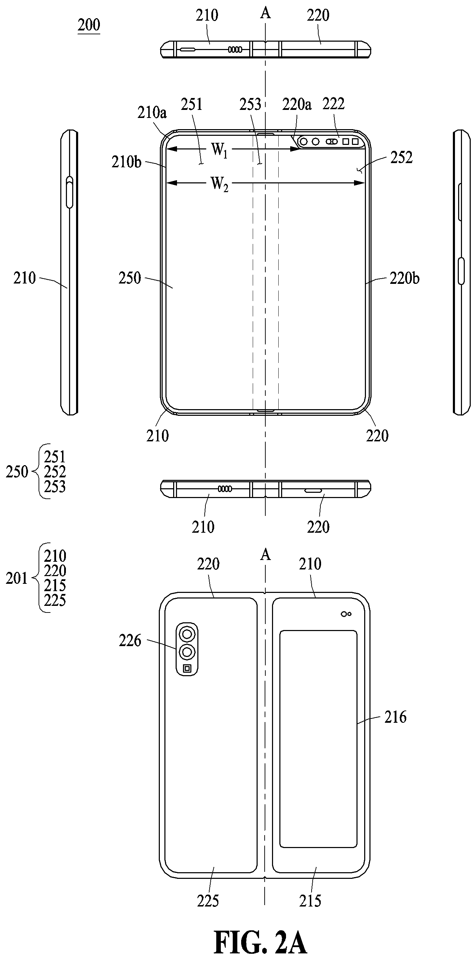

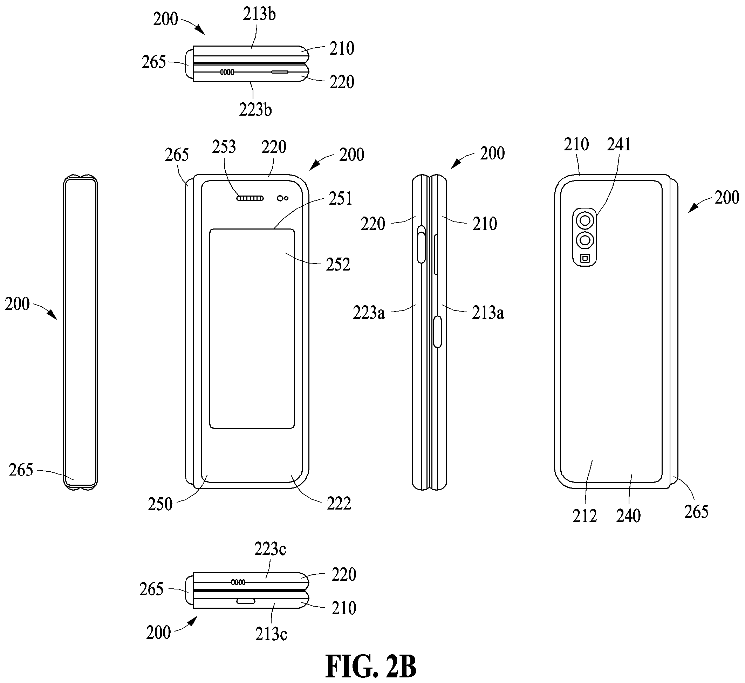

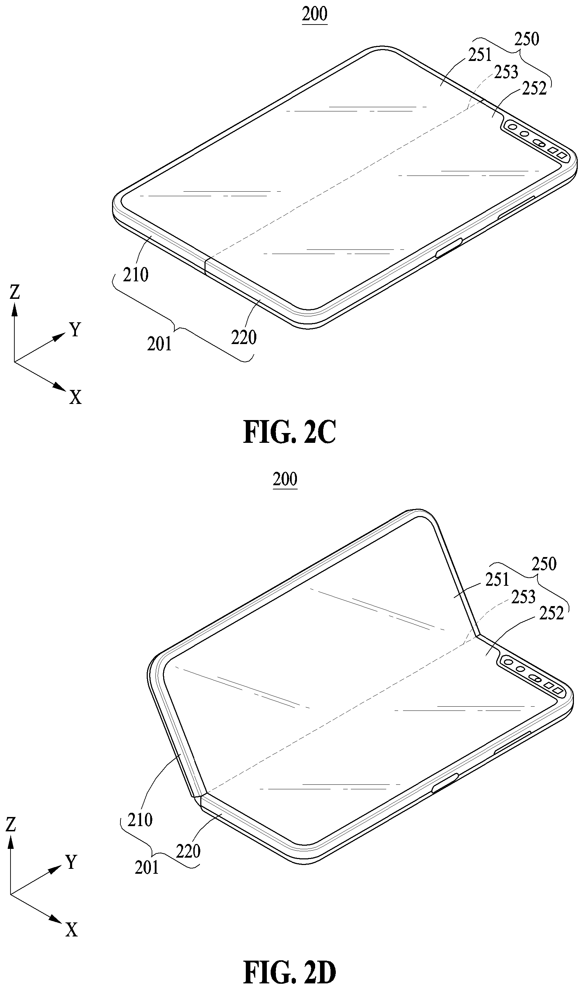

FIG. 2A is a diagram illustrating an unfolded state of an electronic device 200. FIG. 2B is a diagram illustrating a folded state of the electronic device 200. FIG. 2C is a perspective view illustrating an example of a fully unfolded state of the electronic device 200. FIG. 2D is a perspective view illustrating an example of a partially unfolded intermediate state (herein, also referred to as the "intermediate state") of the electronic device 200 .

The electronic device 200 of FIGS. 2A, 2B, 2C, and 2D is an example of the electronic device 101 shown in FIG. 1, and comprises a foldable or bendable electronic device.

FIGS. 2C and 2D show a spatial coordinate system defined by the X-axis, Y-axis, and Z-axis orthogonal to each other. Here, the X-axis denotes the width direction of the electronic device, the Y-axis denotes the length direction of the electronic device, and the Z-axis denotes the height (or thickness) direction of the electronic device. In the following description, a "first direction" refers to a direction parallel to the Z-axis.

Referring to FIGS. 2A and 2B, the electronic device 200 includes a foldable housing 201, and a flexible or foldable display 250 (hereinafter, the "display" 250 in short) (e.g., the display module 160 of FIG. 1) disposed in a space formed by the foldable housing 201. A surface on which the display 250 is disposed (or a surface on which the display 250 is viewed from an outside of the electronic device 200) is defined as a front surface of the electronic device 200. A surface opposite to the front surface is defined as a rear surface of the electronic device 200. A surface surrounding a space between the front surface and the rear surface is defined as a side surface of the electronic device 200.

The foldable housing 201 includes a first housing structure 210, a second housing structure 220 including a sensor area 222, a first rear cover 215, a second rear cover 225, and a hinge structure 265. Here, the hinge structure 265 includes a hinge cover that covers a foldable portion of the foldable housing 201. The foldable housing 201 of the electronic device 200 is not limited to the shape and coupling shown in FIGS. 2A and 2B, and may be implemented in a different shape or a different combination and/or with different coupling of the components. For example, in another embodiment, the first housing structure 210 and the first rear cover 215 may be integrally formed, and the second housing structure 220 and the second rear cover 225 may be integrally formed.

The first housing structure 210 is connected to the hinge structure 265, and includes a first surface facing a first direction, and a second surface facing a second direction opposite to the first direction. The second housing structure 220 is connected to the hinge structure 265 and includes a third surface facing a third direction and a fourth surface facing a fourth direction opposite to the third direction. The second housing structure 220 rotates with respect to the first housing structure 210 about the hinge structure 265. A state of the electronic device 200 may be changed between a folded state and an unfolded state, and vice versa.

The first surface faces the third surface in a state in which the electronic device 200 is fully folded, and the third direction is identical to the first direction in a state in which the electronic device 200 is fully unfolded.

The first housing structure 210 and the second housing structure 220 are disposed on either side of a folding axis A, and are generally symmetrical with respect to the folding axis A. As described hereinafter, an angle or distance between the first housing structure 210 and the second housing structure 220 may vary depending on whether the electronic device 200 is in the unfolded state, the folded state, or a partially unfolded (or partially folded) intermediate state. Unlike the first housing structure 210, the second housing structure 220 additionally includes the sensor area 222, in which various sensors are arranged. However, the first housing structure 210 and the second housing structure 220 have mutually symmetrical shapes in areas other than the sensor area 222.

As shown in FIG. 2A, the first housing structure 210 and the second housing structure 220 together form a recess for accommodating the display 250. Due to the sensor area 222, the recess has at least two different widths in a direction perpendicular to the folding axis A. The recess has a first width w1 between a first portion 210a, parallel to the folding axis A, of the first housing structure 210 and a first portion 220a, formed on an edge of the sensor area 222, of the second housing structure 220. The recess has a second width w2 formed by a second portion 210b of the first housing structure 210 and a second portion 220b, parallel to the folding axis A while not corresponding to the sensor area 222 of the second housing structure 220. In this case, the second width w2 is longer than the first width w1. The first portion 220a and the second portion 220b of the second housing structure 220 may be at different distances from the folding axis A. The widths of the recess are not limited to the shown example. In embodiments, the recess may have a plurality of widths due to the shape of the sensor area 222 or asymmetrical portions of the first housing structure 210 and the second housing structure 220. The sensor area 222 may be formed to have a predetermined (e.g., designated) area adjacent to one corner of the second housing structure 220. However, the arrangement, shape, and size of the sensor area 222 are not limited to the shown example. For example, in another embodiment, the sensor area 222 may be provided at another corner of the second housing structure 220 or in a predetermined area between an upper corner and a lower corner. Components embedded in the electronic device 200 to perform various functions may be exposed to the front surface of the electronic device 200 through the sensor area 222 or through one or more openings provided in the sensor area 222. Such components may include various types of sensors. The sensors may include, for example, at least one of a front camera, a receiver, or a proximity sensor. The sensor area 222 may not be included in the second housing structure 220 or may be formed at a position different from that shown in the drawings.

At least a portion of the first housing structure 210 and the second housing structure 220 are formed of a metal material or a non-metal material having sufficient rigidity to support the display 250. At least a portion formed of the metal material provides a ground plane for the electronic device 200, being electrically connected to a ground line formed on a PCB disposed inside the foldable housing 201.

The first rear cover 215 is disposed on one side of the folding axis A on the rear surface of the electronic device 200, and has a substantially rectangular periphery enclosed by the first housing structure 210. Similarly, the second rear cover 225 is disposed on another side of the folding axis A on the rear surface of the electronic device 200, and has a periphery enclosed by the second housing structure 220.

The first rear cover 215 and the second rear cover 225 are substantially symmetrical about the folding axis A. However, the first rear cover 215 and the second rear cover 225 are not necessarily mutually symmetrical, and in another embodiment, the electronic device 200 includes the first rear cover 215 and the second rear cover 225 having different shapes to those shown in the drawings, and/or different shapes to each other. In other embodiments, the first rear cover 215 may be formed integrally with the first housing structure 210, and the second rear cover 225 may be formed integrally with the second housing structure 220.

The first rear cover 215, the second rear cover 225, the first housing structure 210, and the second housing structure 220 form a space in which various components (e.g., a PCB, or a battery) of the electronic device 200 are to be arranged. One or more components may be disposed or visually exposed on the rear surface of the electronic device 200. For example, at least a portion of a sub-display is visually exposed through a first rear area 216 of the first rear cover 215. One or more components or sensors may be visually exposed through a second rear area 226 of the second rear cover 225. In various embodiments, such sensors may comprise a proximity sensor and/or a rear camera.

A front camera exposed to the front surface of the electronic device 200 through one or more openings provided in the sensor area 222, or a rear camera exposed through the second rear area 226 of the second rear cover 225 may comprise one or more lenses, an image sensor, and/or an ISP. A flash for the camera(s) may be provided, formed , for example as a light emitting diode (LED) or a xenon lamp. In various embodiments, two or more lenses (e.g., infrared camera, wide-angle, and telephoto lenses) and image sensors may be disposed on one surface of the electronic device 200.

Referring to FIG. 2B, the hinge cover is disposed between the first housing structure 210 and the second housing structure 220 to cover internal components (e.g., the hinge structure 265). The hinge structure 265 may be covered by a portion of the first housing structure 210 and a portion of the second housing structure 220, or may be exposed to the outside, depending on the state (e.g., the unfolded state, the intermediate state, or the folded state) of the electronic device 200.

When the electronic device 200 is in the unfolded state (e.g., a fully unfolded state) as illustrated in FIG. 2A, the hinge structure 265 is covered by the first housing structure 210 and the second housing structure 220 not to be exposed. When the electronic device 200 is in the folded state (e.g., a fully folded state), as shown in FIG. 2B, the hinge structure 265 is exposed to the outside between the first housing structure 210 and the second housing structure 220. When the first housing structure 210 and the second housing structure 220 are in the intermediate state where the first housing structure 210 and the second housing structure 220 are folded with a certain angle intermediate to the fully unfolded and fully folded states, a portion of the hinge structure 265 is exposed to the outside between the first housing structure 210 and the second housing structure 220. However, the area exposed in this case is smaller than that in the fully folded state. In an embodiment, the hinge cover 265 has a curved surface.

The display 250 is disposed in a space formed by the foldable housing 201. For example, the display 250 may be seated on the recess formed by the foldable housing 201 and may be viewed from the outside through the front surface of the electronic device 200. The display 250 includes most of the front surface of the electronic device 200. Accordingly, the front surface of the electronic device 200 includes the display 250, and a partial area of the first housing structure 210 and a partial area of the second housing structure 220, which are adjacent to the display 250. In addition, the rear surface of the electronic device 200 includes the first rear cover 215, a partial area of the first housing structure 210 adjacent to the first rear cover 215, the second rear cover 225, and a partial area of the second housing structure 220 adjacent to the second rear cover 225.

The display 250 has at least a partial area that is deformable into a flat surface or a curved surface. The display 250 includes a folding area 253, a first area 251 disposed on one side of the folding area 253 (e.g., on the left side of the folding area 253 shown in FIG. 2A), and a second area 252 disposed on the other side of the folding area 253 (e.g., on the right side of the folding area 253 shown in FIG. 2A).

However, such an area division of the display 250 shown in FIG. 2A is merely an example, and the display 250 may be divided into a plurality of areas (e.g., four or more areas, or two areas) depending on a structure or functions thereof. For example, in the embodiment shown in FIG. 2A, the display 250 may be divided into areas based on the folding area 203 extending in parallel to the folding axis A. In another embodiment, the display 250 may be divided into areas based on another folding axis (e.g., a folding axis parallel to a width direction of the electronic device).

The display 250 may be coupled to or disposed adjacent to a touch panel in which a touch detection circuit and a pressure sensor configured to measure an intensity (or pressure) of a touch are provided. For example, the display 250 is an example of a touch panel, and may be coupled to or disposed adjacent to a touch panel for detecting an electromagnetic resonance type stylus pen.

As shown, the first area 251 and the second area 252 are generally symmetrical about the folding area 253. However, unlike the first area 251, the second area 252 includes a notch that is cut depending on the presence of the sensor area 222, but symmetrical to the first area 251 in the other areas. The first area 251 and the second area 252 includes mutually symmetrical portions and mutually asymmetrical portions.

An edge thickness of each of the first area 251 and the second area 252 may be different from an edge thickness of the folding area 253. The edge thickness of the folding area 253 may be less than those of the first area 251 and the second area 252. The first area 251 and the second area 252 may be asymmetrical in terms of thickness when the first area 251 and the second area 252 are cross-sectionally viewed. For example, an edge of the first area 251 may be formed to have a first radius of curvature, and an edge of the second area 252 may be formed to have a second radius of curvature different from the first radius of curvature. In another example, the first area 251 and the second area 252 may be symmetrical in terms of thickness when the first area 251 and the second area 252 are cross-sectionally viewed.

Hereinafter, each area of the display 250, and operations of the first housing structure 210 and the second housing structure 220 depending on the state (e.g., the folded state, the unfolded state, or the intermediate state) of the electronic device 200 will be described.

When the electronic device 200 is in the unfolded state (e.g., FIG. 2A), the first housing structure 210 and the second housing structure 220 are arranged to face the same direction while forming an angle of 180 degrees with respect to one another. The surface of the first area 251 of the display 250 and the surface of the second area 252 thereof face the same direction (e.g., the front direction of the electronic device) while forming the angle of 180 degrees with respect to one another. The folding area 253 lies in the same plane as the first area 251 and the second area 252.

When the electronic device 200 is in the folded state (e.g., FIG. 2B), the first housing structure 210 and the second housing structure 220 face each other. The surface of the first area 251 of the display 250 and the surface of the second area 252 thereof face each other while forming a narrow angle (e.g., between 0 degrees to 10 degrees). At least a portion of the folding area 253 forms a curved surface having a predetermined curvature.

When the electronic device 200 is in the intermediate state, the first housing structure 210 and the second housing structure 220 are arranged with a certain angle. The surface of the first area 251 of the display 250 and the surface of the second area 252 thereof form an angle greater than that in the folded state and smaller than that in the unfolded state. At least a portion of the folding area 253 includes a curved surface having a predetermined curvature, and the curvature is smaller than that in the folded state.

FIG. 2C illustrates a fully unfolded state of the electronic device 200, and FIG. 2D illustrates a partially unfolded intermediate state of the electronic device 200. As described above, the state of the electronic device 200 may be changed to the folded state or the unfolded state. When viewed in a direction of a folding axis (e.g., the folding axis A of FIG. 2A), the electronic device 200 may be folded in one of two ways, according to two types of fold. That is, an "in-folding" type in which the front surface of the electronic device 200 is folded to form an acute angle, and an "out-folding" type in which the front surface of the electronic device 200 is folded to form an obtuse angle. For example, in the state in which the electronic device 200 is folded as the in-folding type, the first surface of the first housing structure 210 faces the third surface of the second housing structure 220. **In** the fully unfolded state, the first surface of the first housing structure 210 and the third surface of the second housing structure 220 face the same direction (e.g., a direction parallel to the Z-axis).

Further, for example, when the electronic device 200 is folded as the out-folding type, the second surface of the first housing structure 210 faces the fourth surface of the second housing structure 220.

**In** addition, although not shown in the drawings, the electronic device 200 may comprise a plurality of hinge axes (e.g., two parallel hinge axes including the folding axis A of FIG. 2A and another axis parallel to the folding axis A). In this case, the electronic device 200 may also be folded as a "multi-folding" type in which the in-folding type and the out-folding type are combined.

The in-folding type thus refers to a state in which the display 250 is not exposed to the outside in the fully folded state. The out-folding type thus refers to a state in which the display 250 is exposed (e.g., visible) to the outside in the fully folded state. FIG. 2D shows an intermediate state in which the electronic device 200 is partially unfolded in an in-folding process.

Although the state in which the electronic device 200 is folded as the in-folding type will be described below for convenience, it should be noted that the description may be similarly applied in the state in which the electronic device 200 is folded as the out-folding type.

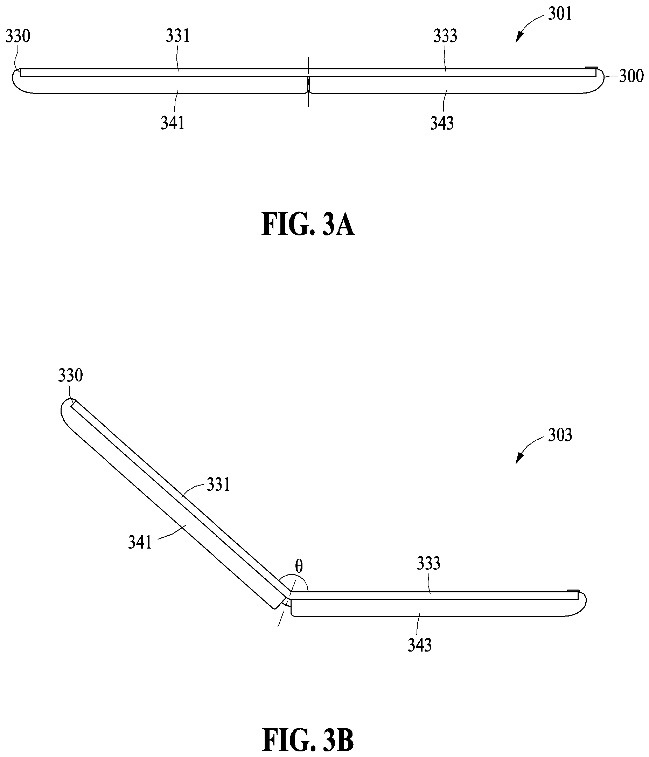

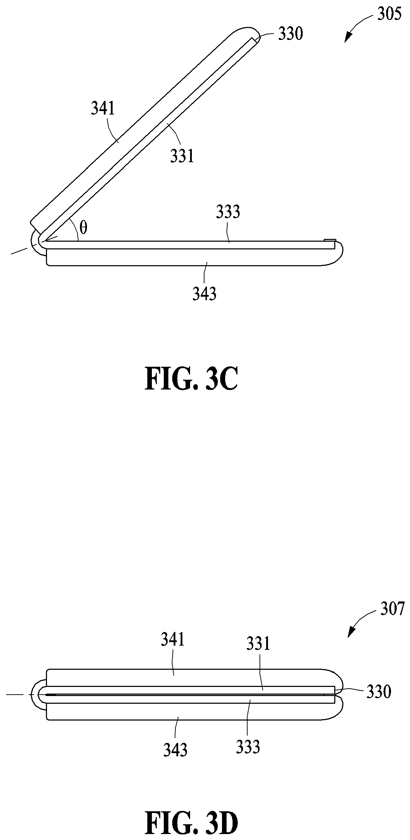

FIGS. 3A, 3B, 3C, and 3D are views illustrating a fully unfolded state, partially unfolded intermediate states, and a fully folded state of an electronic.

Referring to FIGS. 3A, 3B, 3C, and 3D, an electronic device 300 (e.g., the electronic device 101 of FIG. 1 or the electronic device 200 of FIGS. 2A to 2D) includes a foldable display 330 (e.g., the display module 160 of FIG. 1 or the display 250 of FIGS. 2A to 2D), a first housing 341, and a second housing 343.

A state 301 may be a fully unfolded state or an unfolded state of the electronic device 300.

In the state 301, the electronic device 300 is foldable. For example, the electronic device 300 is foldable as the first housing 341 and/or the second housing 343 are folded.

As the electronic device 300 is folded, the first area 331 and the second area 333 of the foldable display 330 form an angle θ based on the folding axis, as in a state 303 and a state 305. When the angle θ is within a predetermined range, the state 303 and the state 305 are referred to as "partially unfolded intermediate states", and the angle θ formed by the first region 331 and the second region 333 are referred to as the "folding angle".

The folding angle in the partially unfolded intermediate state 303 is about 135 degrees, and the folding angle in the partially unfolded intermediate state 305 is about 45 degrees.

A state 307 is a fully folded state of the electronic device 300.

In the examples shown in FIGS. 3A, 3B, 3C, and 3D, the electronic device 300 folds so that the first area 331 and the second area 333 face each other. In other words, the screen may be folded inward. This folding type may be called in-folding. Alternatively, the electronic device 300 may be implemented so that the first area 331 and the second area 333 may be folded in opposite directions. In other words, the screen may be implemented to be folded outward.

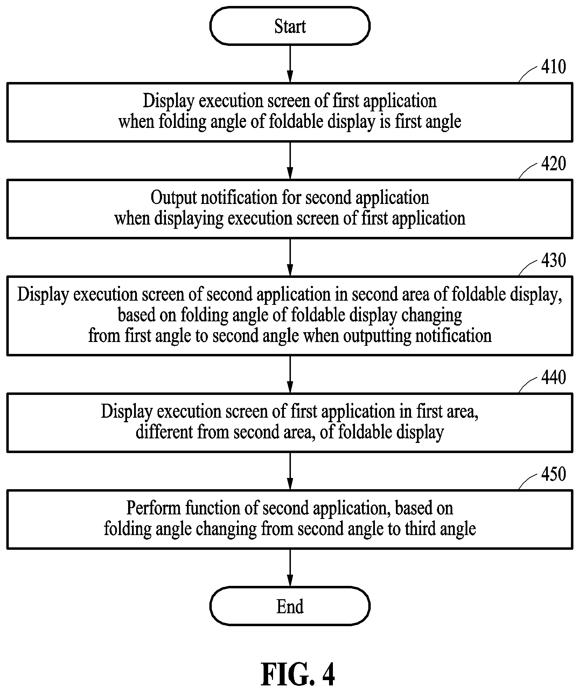

FIG. 4 illustrates an example of a method of displaying an execution screen of an application by an electronic device.

An electronic device (e.g., the electronic device 101 of FIG. 1, the electronic device 200 of FIGS. 2A to 2D, or the electronic device 300 of FIGS. 3A to 3D) displays an execution screen of an application which is changed according to changes in the folding angle of a foldable display. That is, the displayed contents are based on the folding angle.

In operation 410, the electronic device displays an execution screen of a first application when the folding angle of the foldable display is a first angle.

For example, the electronic device is configured to execute the first application when the folding angle is the first angle. When executing the first application, the electronic device displays the execution screen of the first application in an available area of the foldable display. The available area of the foldable display refer to an area set to display an execution screen of an application, from the display area of the foldable display. The display area of the foldable display refers to the entire area in which the foldable display may display graphic objects. For example, a partial area corresponding to the upper end of the foldable display may be assigned to an object (e.g., a status bar) indicating the state (e.g., battery state or communication state) of the electronic device. The electronic device may set the remaining area of the display area of the foldable display, excluding the partial area assigned to the status bar, as an available area, which is available for an execution screen of an application.

Executing an application includes, for example executing the application in the foreground. When the electronic device executes an application in the foreground, the execution screen of the application is output. However, in comparison, when the electronic device executes an application in the background, the execution screen of the application is not output. Unless otherwise mentioned herein, the execution of an application refers to foreground execution. **In** the present disclosure, executing an application may be interpreted as corresponding to displaying the execution screen of the application.

**In** operation 420, the electronic device is configured to output a notification for a second application when displaying the execution screen of the first application.

For example, the electronic device is configured to receive a notification for the second application from a server that provides a service corresponding to the second application, while executing the first application. The electronic device is configured to output the notification for the second application. For example, the electronic device may display a graphic object corresponding to the notification through the foldable display. For example, the electronic device may play a sound corresponding to the notification through a speaker.

The electronic device is configured to output the notification for the second application for a predetermined length of time. For example, the electronic device may maintain displaying the graphic object corresponding to the notification through the foldable display for the predetermined length of time, and stop displaying the graphic object corresponding to the notification after a predetermined time elapses from the occurrence of the notification. For example, the electronic device may play (e.g., continually play) the sound corresponding to the notification through the speaker for the predetermined length of time, and stop playing the sound corresponding to the notification after the predetermined time elapses from the occurrence of the notification.

The first angle comprises the folding angle formed by the foldable display at the timepoint at which the notification of the second application is output. For example, when the notification of the second application is output during a time period, the first angle comprises the folding angle formed by the foldable display at the timepoint at which the notification of the second application starts to be output. As described later, the electronic device is configured to execute an application and/or display an execution screen of an application in response to a change in the folding angle.

In operation 430, the electronic device displays an execution screen of the second application associated with the notification in a second area of the foldable display, in response to, i.e., based on the folding angle of the foldable display changing from the first angle to a second angle when outputting the notification. The electronic device may determine a partial area, to display the execution screen of the second application, of the available area of the display to be the second area. For example, the electronic device is configured to execute the second application and display the execution screen of the second application associated with the notification.

For example, when outputting the notification for the predetermined length of time, the electronic device is configured to detect a change in the folding angle of the foldable display at timepoints included in the predetermined length of time during which the notification is being output.

The second angle is different from the first angle. For example, the second angle may be an angle included in an angle range determined based on the first angle. For example, when the first angle is greater than or equal to 80 degrees and less than 100 degrees, the second angle may be included in an angle range of greater than or equal to 100 degrees or less than 120 degrees. For example, when the first angle is greater than or equal to 170 degrees and less than 180 degrees, the second angle may be included in an angle range of greater than or equal to 150 degrees and less than 170 degrees.

The execution screen of the second application may be associated with the output notification. For example, the second application may be a messaging application, and the notification may be about receiving a message through a predetermined chatroom. The electronic device may display a chatroom screen corresponding to the predetermined chatroom, including the received message, based on the folding angle being the second angle.

In operation 440, the electronic device may display the execution screen of the first application in a first area of the foldable display, the first area different from the second area. For example, the first area of the foldable display may be the remaining area, excluding the second area, of the available areas of the foldable display. When the folding angle is the second angle, the electronic device may simultaneously display the execution screen of the first application and the execution screen of the second application through a split screen.

In operation 450, the electronic device is configured to perform functions of the second application based on the folding angle changing from the second angle to a third angle. The functions of the second application may be accessible by the electronic device from the execution screen of the second application displayed.

The electronic device may access at least one of the functions of the second application through the execution screen of the second application. A user may control the electronic device to perform the functions of the second application by changing the folding angle of the foldable display of the electronic device.

The third angle may have a greater difference from the first angle than the second angle. **In** other words, the second angle may have a value between the first angle and the third angle. For example, the first angle may be greater than the second angle, and the second angle may be greater than the third angle. The folding angle changing from the first angle to the second angle and then to the third angle corresponds to the foldable display being gradually folded. As another example, the first angle may be smaller than the second angle, and the second angle may be smaller than the third angle. The folding angle changing from the first angle to the second angle and then to the third angle in this case corresponds to the foldable display being gradually unfolded.

The execution screen of the second application may allow access to the plurality of functions of the second application. The electronic device is configured to perform a function mapped to the notification among the plurality of accessible functions of the second application. For example, when the second application is a messaging application, the electronic device may access, through an execution screen (e.g., a chatroom screen) of the messaging application, a function of viewing messages sent and received through the chatroom, a function of writing a message to be sent through the chatroom, a function of viewing information on another user in the chatroom, and a function of blocking another user in the chatroom. A message reception notification may be mapped to the function of writing a message to be sent through the chatroom. The electronic device is configured to perform the function of writing a message to be sent through the second application based on the folding angle being the third angle.

The electronic device may expand the second area assigned to the second application. The electronic device may expand the second area assigned to the second application based on the folding angle changing from the second angle to the third angle. The electronic device may display the execution screen of the second application in the expanded second area.

In the electronic device, the function of the second application includes displaying an interfacing object to obtain a user input through the foldable display. For example, the electronic device may display a changed execution screen of the second application. The changed execution screen of the second application includes the interfacing object. The interfacing object is an example of a graphic object and includes at least one button to obtain an input from the user. For example, the interfacing object may comprise a keyboard object or a controller object.

For example, when a message reception notification for the messaging application is received and the folding angle changes from the first angle to the second angle and then to the third angle, the electronic device is configured to perform the function of writing a message to be sent, of the messaging application. When the folding angle changes from the second angle to the third angle, the electronic device may expand the second area assigned to the messaging application at the second angle. When the function of writing a message to be sent, of the messaging application, is performed, the electronic device may display the execution screen including a graphic object (e.g., the keyboard object) in the expanded second area.

The electronic device may determine a layout of the execution screen of the first application and the execution screen of the second application based on the properties of the execution screen of the first application and the execution screen of the second application. For example, the electronic device may determine at least one of the first area to display the execution screen of the first application or the second area to display the execution screen of the second application, of the foldable display, based on properties of the execution screen of the first application and the execution screen of the second application.

The execution screen includes a plurality of partial execution screens. The electronic device may determine an area to display each partial execution screen based on the property of the partial execution screen. The electronic device may display each partial execution screen for one application in an area adjacent to another partial execution screen for the same application.

The property of an execution screen (or partial execution screen) may indicate whether the execution screen (or partial execution screen) is a screen that uses a camera, a screen to display content, or a screen to obtain a user input. The content may comprise at least one of a text, an image, or a video.

For example, when the execution screen (or partial execution screen) is a screen that uses a camera, the electronic device may assign an area adjacent to the camera to the execution screen. For example, when the execution screen (or partial execution screen) is a screen to display content, the electronic device may assign an upper part of the foldable display to the execution screen. For example, when the execution screen (or partial execution screen) is a screen to obtain a user input, the electronic device may assign a lower part of the foldable display to the execution screen. The upper part or lower part of the foldable display may be determined based on a pose of the electronic device. For example, the electronic device may determine the half closer to the surface of the earth to be the lower part and the half farther from the surface of the earth to be the upper part, of the available area of the foldable display, based on the pose of the electronic device. The pose of the electronic device may be determined based on sensing data obtained from a sensor (e.g., the sensor module 176 of FIG. 1).

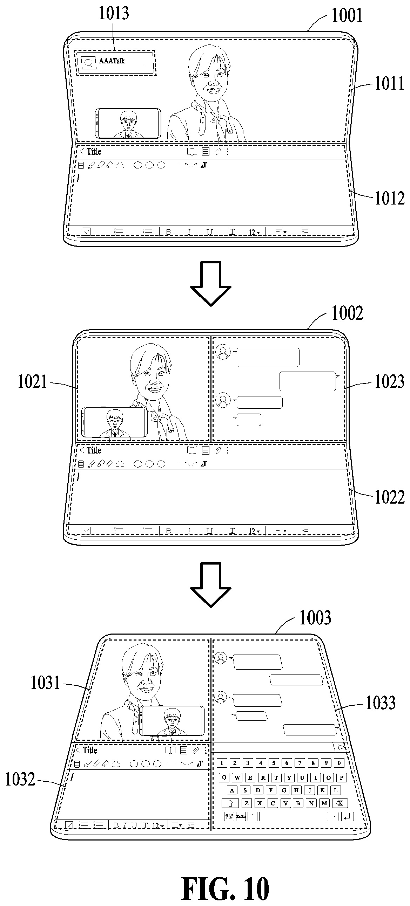

Executing a single first application while the electronic device has the first angle is mainly described, but other embodiments are envisaged, and the electronic device is configured to execute a plurality of applications while having the first angle. An embodiment in which the electronic device outputs a notification for the second application after displaying execution screens of a plurality of applications on the foldable display having the first angle will be described in more detail later with reference to FIG. 10.

Although not explicitly shown in FIG. 4, the electronic device is configured to detect an input from the user for a notification while outputting the notification.

The electronic device may stop displaying the execution screen of the first application based on detecting the input from the user for the output notification. The electronic device may display the execution screen of the second application associated with the notification in the first area and the second area of the foldable display.

For example, when displaying the execution screen of the first application, the electronic device may display the graphic object corresponding to the notification for the second application through the foldable display. The electronic device is configured to detect an input (e.g., a touch input) from the user for a graphic object corresponding to the notification. The electronic device may display the execution screen of the second application in a full screen based on detecting the input (e.g., the touch input) from the user for the graphic object corresponding to the notification. For example, the electronic device may display the execution screen of the second application in the available area, which is available for an execution screen of an application, of the foldable display. The electronic device may stop displaying the execution screen of the first application and display the execution screen of the second application solely.

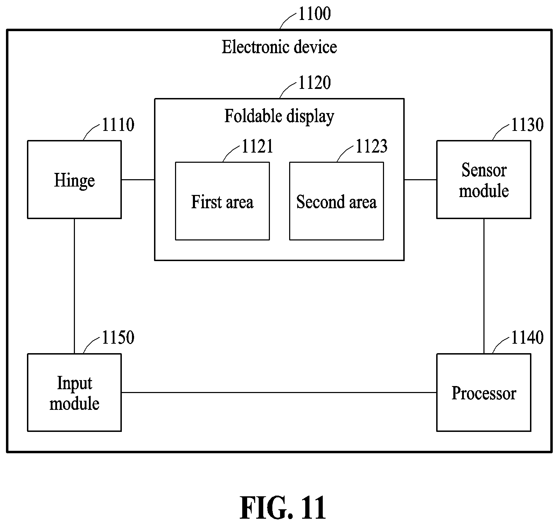

An example of determining the folding angle formed by the foldable display and/or detecting a change in the folding angle will be described in more detail later with reference to FIG. 11.

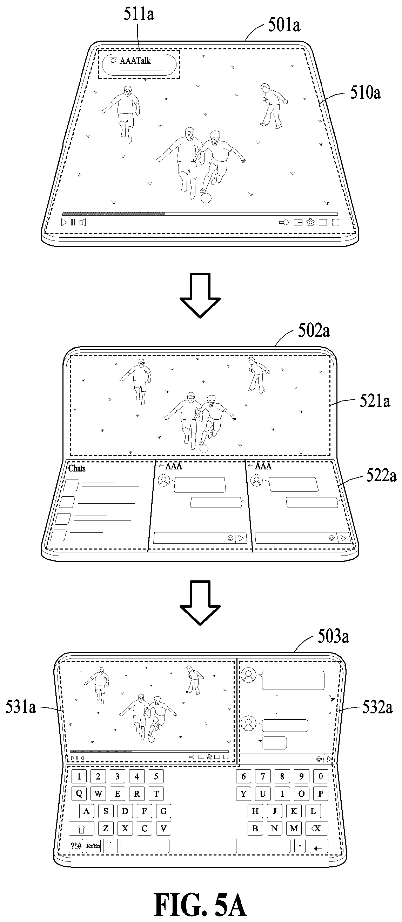

FIG. 5A is a diagram illustrating an example of an operation of displaying execution screens of a first application and a second application as the folding angle of an electronic device decreases.

An electronic device is configured to execute a first application (e.g., a video application) in a first state 501a in which the folding angle is a first angle (e.g., 180 degrees). The electronic device assigns an available area 510a of a foldable display to the first application in the first state 501a. The electronic device displays an execution screen (e.g., a video playback screen) of the first application in the available area 510a. The electronic device is configured to output a notification 511a (e.g., a message reception notification) for a second application (e.g., a messaging application) in the first state 501a.

The state of the electronic device may change from the first state 501a to a second state 502a in which the folding angle is a second angle (e.g., 150 degrees) within a threshold time from the output of the notification 511a. In the second state 502a, the electronic device displays an execution screen (e.g., a message view screen) of the second application in a second area 522a of the foldable display and display the execution screen of the first application in the first area 521a of the foldable display.

For example, the electronic device may determine an area to display the execution screen of the first application to be the first area 521a including an upper area of the foldable display, based on the property of the execution screen of the first application being a screen to display content. The electronic device may determine the remaining area excluding the first area 521a to be the second area 522a to display the execution screen of the second application.

The state of the electronic device may change from the second state 502a to a third state 503a in which the folding angle is a third angle (e.g., 120 degrees). **In** response to a change in the state of the electronic device from the second state 502a to the third state 503a, the electronic device expands the second area to display the execution screen of the second application from the area 522a to an area 532a. The electronic device is configured to perform a message writing function in the third state 503a. **In** the third state 503a, the electronic device displays the execution screen of the second application in the area 532a. The execution screen of the second application includes a partial execution screen to view messages and a partial execution screen to write a message. The partial execution screen to write a message includes an interfacing object corresponding to a keyboard to obtain an input from a user.

For example, based on the property of the execution screen of the first application being a screen to display content, the electronic device may determine an area to display the execution screen of the first application to be a first area 531a including a portion of an upper area of the foldable display. Based on the property of a partial execution screen (e.g., a partial execution screen to write a message) of the second application being a screen to obtain an input from a user, the electronic device may determine a lower area of the foldable display to be the second area 532a to display the partial execution screen. Based on the property of a partial execution screen (e.g., a partial execution screen to view messages) of the second application being a screen to display content (e.g., messages), the electronic device may determine a portion of an upper area of the foldable display to be the second area 532a to display the partial execution screen.

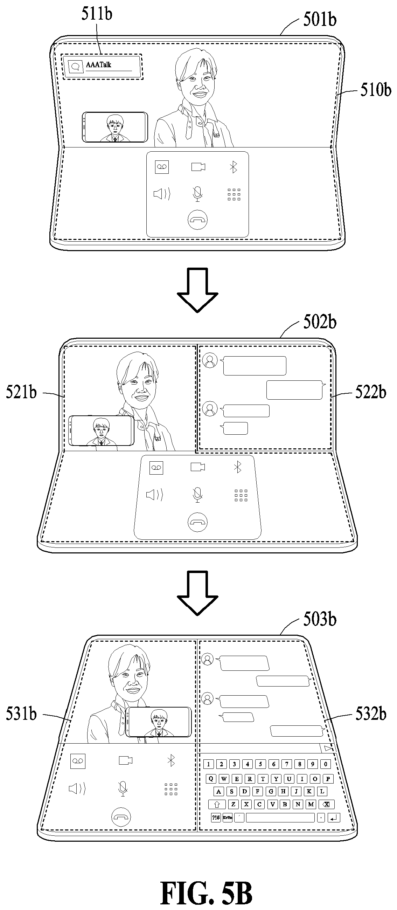

FIG. 5B is a diagram illustrating an example of an operation of displaying execution screens of a first application and a second application as the folding angle of an electronic device increases.

An electronic device is configured to execute a first application (e.g., a call application) in a first state 501b in which the folding angle is a first angle (e.g., 120 degrees). The electronic device may assign an available area 510b of a foldable display to the first application in the first state 501b. The electronic device may display an execution screen (e.g., a video call screen) of the first application in the available area 510b. The execution screen of the first application includes a partial execution screen to display a video of another user and a partial execution screen including a controller for a video call. The electronic device is configured to output a notification 511b (e.g., a message reception notification) for a second application (e.g., a messaging application) in the first state 501b.

The state of the electronic device may change from the first state 501b to a second state 502b in which the folding angle is a second angle (e.g., 150 degrees) within a threshold time from the output of the notification 511b. **In** the second state 502b, the electronic device displays an execution screen (e.g., a message view screen) of the second application in a second area 522b of the foldable display and display the execution screen of the first application in the first area 521b of the foldable display.

For example, based on the property of a partial execution screen (e.g., a partial execution screen to display a video of another user) of the first application being a screen to display content, the electronic device determines a portion of an upper area of the foldable display to be the first area 521b to display the partial execution screen. Based on the property of the partial execution screen (e.g., the partial execution screen including the controller for a video call) of the first application being a screen to obtain an input from a user, the electronic device determines a lower area of the foldable display to be the first area 521b to display the partial execution screen. Based on the property of the execution screen of the second application being a screen to display content, the electronic device determines at least a portion of the upper area of the foldable display to be the second area 522b. Alternatively, the electronic device may determine the remaining area excluding the first area 521b to be the second area 522b to display the execution screen of the second application.

The state of the electronic device may change from the second state 502b to a third state 503b in which the folding angle is a third angle (e.g., 180 degrees). In response to a change in the state of the electronic device from the second state 502b to the third state 503b, the electronic device expands the second area to display the execution screen of the second application from the area 522b to an area 532b. The electronic device is configured to perform a message writing function in the third state 503b. In the third state 503b, the electronic device displays the execution screen of the second application in the area 532b. The execution screen of the second application includes a partial execution screen to view messages and a partial execution screen to write a message. The partial execution screen to write a message includes an interfacing object corresponding to a keyboard to obtain an input from a user.

For example, based on the property of a partial execution screen (e.g., a partial execution screen to display a video of another user) of the first application being a screen to display content, the electronic device determines a portion of an upper area of the foldable display to be the first area 531b to display the partial execution screen. Based on the property of the partial execution screen (e.g., the partial execution screen including the controller for a video call) of the first application being a screen to obtain an input from a user, the electronic device determines a portion of a lower area of the foldable display to be the first area 531b to display the partial execution screen. Based on the property of a partial execution screen (e.g., a partial execution screen to write a message) of the second application being a screen to obtain an input from a user, the electronic device determines a lower area of the foldable display to be the second area 532b to display the partial execution screen. Based on the property of a partial execution screen (e.g., a partial execution screen to view messages) of the second application being a screen to display content (e.g., messages), the electronic device determines a portion of an upper area of the foldable display to be the second area 532b to display the partial execution screen.

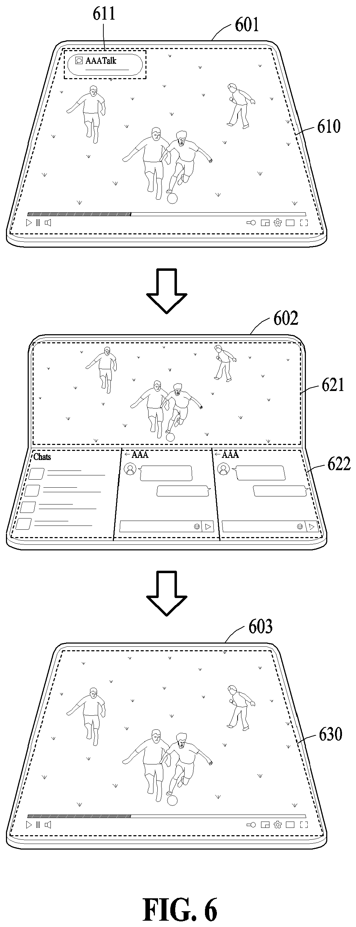

FIG. 6 is a diagram illustrating an operation of displaying an execution screen of an application when the folding angle of an electronic device changes to a first angle.

An electronic device (e.g., the electronic device 101 of FIG. 1, the electronic device 200 of FIGS. 2A to 2D, or the electronic device 300 of FIGS. 3A to 3D) according to an embodiment may stop displaying an execution screen of a second application in a second area, based on a change in the folding angle from a second angle or a third angle to a first angle. When the folding angle returns to the first angle, the electronic device may stop executing the second application and displaying the execution screen of the second application.

The electronic device may display an execution screen of a first application in the second area. The electronic device may display the execution screen of the first application while maintaining the execution of the first application. For example, the electronic device may display the execution screen of the first application in an available area including the first area and the second area where the execution screen of the second application was displayed.

As shown in FIG. 6, the electronic device is configured to execute the first application (e.g., a video application) in a first state 601 in which the folding angle is a first angle (e.g., 180 degrees). The electronic device assigns an available area 610 of the foldable display to the first application in the first state 601. The electronic device displays an execution screen (e.g., a video playback screen) of the first application in the available area 610. The electronic device is configured to output a notification 611 (e.g., a message reception notification) for a second application (e.g., a messaging application) in the first state 601.

The state of the electronic device may change from the first state 601 to a second state 602 in which the folding angle is a second angle (e.g., 150 degrees) within a threshold time from the output of the notification 611. In the second state 602, the electronic device displays an execution screen (e.g., a message view screen) of the second application in a second area 622 of the foldable display and displays the execution screen of the first application in the first area 621 of the foldable display.

The state of the electronic device may change from the second state 602 to a third state 603, which is the same as the first state 601. The electronic device stops executing the second application based on the state of the electronic device returning to the first state. The electronic device stops displaying the execution screen of the second application. The electronic device displays the execution screen of the first application in an available area 630 of the foldable display.

It is shown in FIG. 6 that the first angle is greater than the second angle, but embodiments are not limited thereto. As described above with reference to FIG. 4, even when the first angle is smaller than the second angle and the third angle, the electronic device may stop displaying the execution screen of the second application when the folding angle changes from the second angle or the third angle to the first angle.

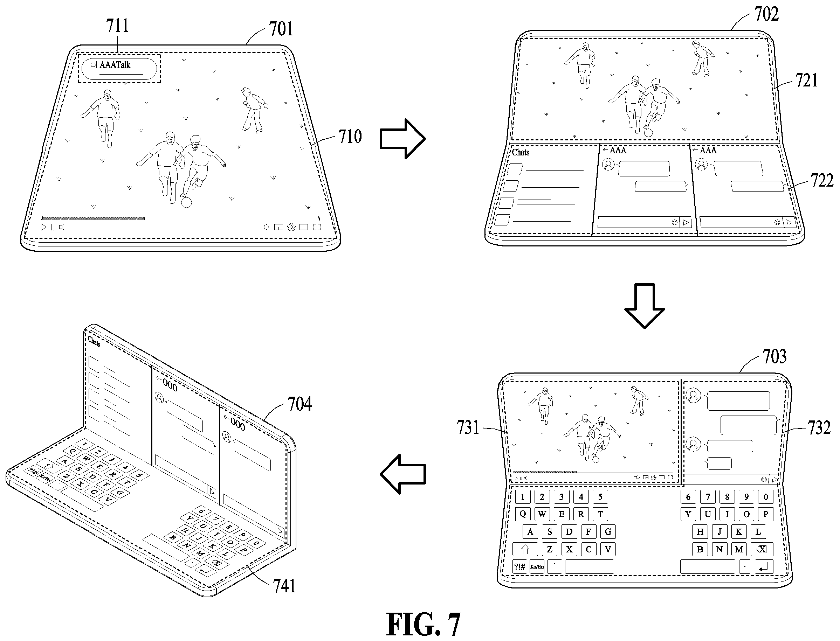

FIG. 7 is a diagram illustrating an operation of displaying an execution screen of an application when the folding angle of an electronic device changes to a fourth angle.

An electronic device (e.g., the electronic device 101 of FIG. 1, the electronic device 200 of FIGS. 2A to 2D, or the electronic device 300 of FIGS. 3A to 3D) may stop displaying an execution screen of a first application in a second area, based on a change in the folding angle from a third angle to a fourth angle. When the folding angle changes to the fourth angle, the electronic device may stop executing the first application and displaying the execution screen of the first application.

The fourth angle is an angle that is more changed from the first angle than the third angle. For example, when the first angle is greater than the second angle and the second angle is greater than the third angle, the third angle may be greater than a fourth angle. As another example, when the first angle is smaller than the second angle and the second angle is smaller than the third angle, the third angle may be smaller than the fourth angle.

The electronic device displays an execution screen of a second application in the first area. The electronic device displays the execution screen of the second application while maintaining the execution of the second application. For example, the electronic device displays the execution screen of the second application in an available area including a second area and the first area where the execution screen of the first application was displayed.

As shown in FIG. 7, the electronic device is configured to execute the first application (e.g., a video application) in a first state 701 in which the folding angle is a first angle (e.g., 180 degrees). The electronic device assigns an available area 710 of the foldable display to the first application in the first state 701. The electronic device displays an execution screen (e.g., a video playback screen) of the first application in the available area 710. The electronic device is configured to output a notification 711 (e.g., a message reception notification) for a second application (e.g., a messaging application) in the first state 701.

The state of the electronic device may change from the first state 701 to a second state 702 in which the folding angle is a second angle (e.g., 150 degrees) within a threshold time from the output of the notification 711. **In** the second state 702, the electronic device displays an execution screen (e.g., a message view screen) of the second application in a second area 722 of the foldable display and display the execution screen of the first application in the first area 721 of the foldable display.

The state of the electronic device may change from the second state 702 to a third state 703 in which the folding angle is a third angle (e.g., 120 degrees). **In** the third state 703, the electronic device expands the second area to display the execution screen of the second application from the area 722 to an area 732. **In** the third state, the electronic device displays the execution screen (e.g., the execution screen including a partial execution screen to view messages and a partial execution screen to write a message) of the second application in the expanded second area 732 and display the execution screen of the first application in a first area 731 of the foldable display.

The state of the electronic device may change from the third state 703 to a fourth state 704 in which the folding angle is a fourth angle (e.g., 90 degrees). The electronic device stops executing the first application and displaying the execution screen of the first application. **In** the fourth state 704, the electronic device is configured to execute the second application and display the execution screen of the second application. The electronic device displays the execution screen of the second application in the first area 721 in which the execution screen of the first application was displayed in the second state 702 or the first area 731 in which the execution screen of the first application was displayed in the third state 703. **In** the fourth state 704, the electronic device assigns an available area 741 of the foldable display to the second application. The electronic device displays the execution screen of the second application in the available area 741.

Although not explicitly shown in FIG. 7, the electronic device may reduce the second area to display the execution screen of the second application when the state of the electronic device changes from the third state 703 to the second state 702. The electronic device may expand the first area to display the execution screen of the first application. Additionally, when the state of the electronic device changes from the third state 703 to the second state 702, the electronic device may stop performing a function (e.g., a message writing function) of the second application. For example, the electronic device may stop displaying a partial execution screen to perform a function (e.g., a partial execution screen to write a message), of the execution screen of the second application.

For example, the electronic device may reduce the second area to display the execution screen of the second application from the area 732 to the area 722 based on a change in the folding angle of the electronic device from the third angle to the second angle. The electronic device may expand the first area to display the execution screen of the first application from the area 731 to the area 721. In the second state 702, the electronic device may display the execution screen of the second application in the reduced second area 722. 'In the second state 702, the electronic device may display the execution screen of the first application in the expanded first area 721.

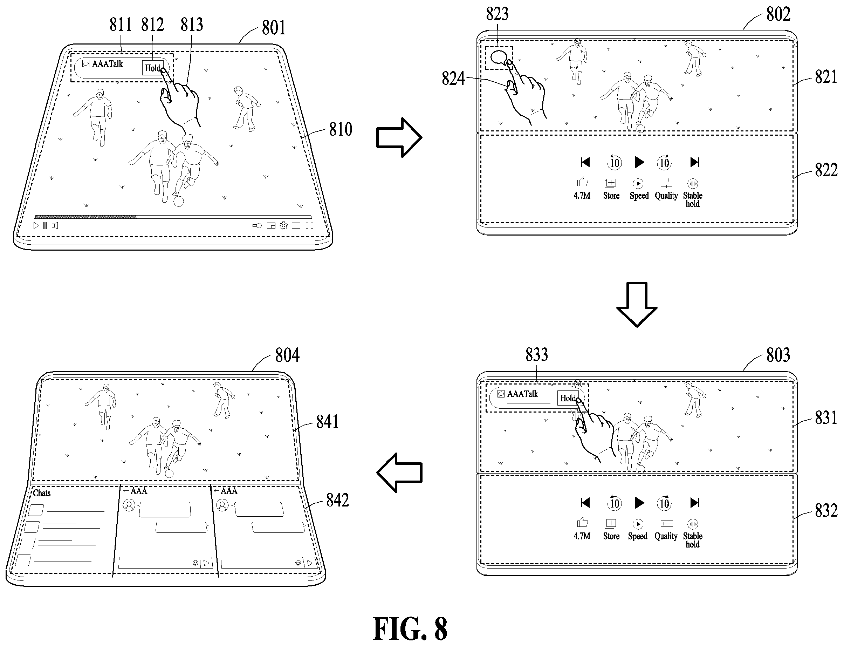

FIG. 8 is a diagram illustrating an operation of displaying an execution screen of an application by an electronic device when an additional notification for a third application is output.

An electronic device (e.g., the electronic device 101 of FIG. 1, the electronic device 200 of FIGS. 2A to 2D, or the electronic device 300 of FIGS. 3A to 3D) may obtain a touch-and-hold, or "holding" input from a user, for or on a notification of a second application.

The electronic device maintains outputting the notification based on obtaining the holding input from the user for the notification of the second application. The electronic device holds an operation on the notification based on the holding input. For example, the operation on the notification includes executing the second application, displaying an execution screen of the second application, or performing a function of the second application, based on a change in the folding angle (e.g., a change from a first angle to a second angle or a change from the second angle to a third angle). The electronic device may restrict performing an operation for the notification until a release input is obtained.

Referring to FIG. 8, the electronic device is configured to execute a first application (e.g., a video application) in a first state 801. For example, the first state 801 is a state in which the folding angle of the foldable display is 180 degrees. The electronic device assigns an available area 810 of the foldable display to the first application in the first state 801. The electronic device displays an execution screen (e.g., a video playback screen) of the first application in the available area 810. The electronic device is configured to output a notification (e.g., a message reception notification) for a second application (e.g., a messaging application) in the first state 801. For example, the electronic device displays a graphic object corresponding to the notification. The graphic object corresponding to the notification is displayed in a first graphical representation 811. The electronic device displays the graphic object corresponding to the notification, said graphic object corresponding to the notification including an area 812 (e.g., a button) corresponding to a holding input. The electronic device may obtain a holding input 813 from the user for the notification by detecting a user input (e.g., a touch input) in the area 812.

The electronic device maintains outputting the notification based on the holding input 813 obtained from the user for the notification. The electronic device restricts executing the second application and displaying the execution screen of the second application based on the holding input. For example, the electronic device may neither execute the second application nor display the execution screen of the second application even when the state of the electronic device changes from the first state 801 to a second state 802. For example, the second state 802 is a state in which the folding angle of the foldable display is 90 degrees. **In** FIG. 8, in the second state 802, the electronic device displays the execution screen of the first application in the available area of the foldable display. **In** the second state 802, the execution screen of the first application includes a partial execution screen to play a video and a partial execution screen including a controller for video playback. For the execution screen of the first application, the electronic device displays the partial execution screen to play a video in an area 821 and display the partial execution screen including the controller for video playback in an area 822.

The electronic device may obtain a release input 824 from the user for the notification. For example, the electronic device may maintain outputting the notification based on obtaining the holding input 813 for the notification. The electronic device may display a graphic object corresponding to the notification in a second graphical representation 823 changed from the first graphical representation 811 while maintaining outputting the notification based on the holding input 813. The electronic device is configured to detect the release input 824 for the notification by detecting an input (e.g., a touch input) from the user on the graphic object in the second graphical representation 823.

The second graphical representation 823 may be simpler than the first graphical representation 811. For example, the second graphical representation 823 may be smaller in size than the first graphical representation 811. For example, the second graphical representation 823 includes part of the content included in the first graphical representation 811, or includes other content that summarizes the content included in the first graphical representation 811.

The electronic device may maintain outputting the notification for a threshold time from the timepoint at which the release input 824 is obtained. As described later, the electronic device is configured to detect a change in the folding angle when outputting a notification after obtaining the release input 824.

The electronic device may display the execution screen of the second application based on the release input 824.

For example, the electronic device is configured to detect a change in the folding angle based on the folding angle at the timepoint at which the release input 824 is obtained. As shown in FIG. 8, the electronic device determines the folding angle (e.g., 90 degrees) at the timepoint at which the release input 824 is obtained to be the first angle. When outputting a notification after obtaining the release input, the electronic device displays the execution screen of the second application based on detecting a change in the folding angle. The electronic device determines the folding angle at the timepoint at which the release input 824 is obtained, independently of the folding angle at the timepoint at which the notification is output, to be the first angle, and displays the execution screen of the second application according to a change in the folding angle.

The electronic device displays, in a third state 803, a graphic object corresponding to the notification in a first graphical representation 831 changed from the second graphical representation 823, based on obtaining the release input 824. For example, the first graphical representation 831 includes an area corresponding to a holding input. The electronic device is configured to detect a holding input through the first graphical representation 813.

The state of the electronic device may change from the third state 803 to a fourth state 804 in which the folding angle is a second angle (e.g., 150 degrees) when outputting a notification after obtaining the release input. When outputting a notification after obtaining the release input, the electronic device is configured to execute the second application and/or display the execution screen of the second application based on a change in the folding angle to the second angle. The electronic device displays the execution screen of the second application in a second area 842 of the foldable display. The electronic device displays the execution screen of the first application in a first area 841 of the foldable display.

However, embodiments are not limited to the example in which the electronic device displays the execution screen of the second application based on detecting a change in the folding angle when outputting a notification after obtaining a release input. For example, the electronic device may display the execution screen of the second application in response to obtaining a release input, even when a change in the folding angle is not detected.

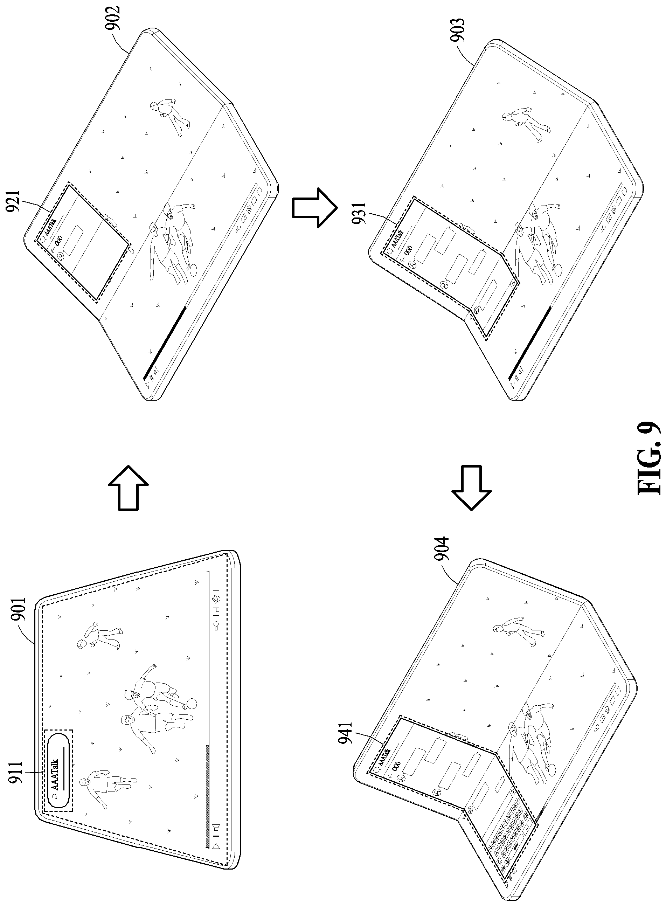

FIG. 9 is a diagram illustrating an example of an operation of displaying an execution screen of a second application through a window by an electronic device.

An electronic device (e.g., the electronic device 101 of FIG. 1, the electronic device 200 of FIGS. 2A to 2D, or the electronic device 300 of FIGS. 3A to 3D) may display an execution screen of a second application through a window. The electronic device may overlay the window including the execution screen of the second application on an execution screen of a first application. The electronic device may display the execution screens of the first application and the second application so that at least a portion of the execution screen of the first application may be occluded by the execution screen of the second application.

As shown in FIG. 9, the electronic device is configured to execute the first application (e.g., a video application) in a first state 901 in which the folding angle is a first angle (e.g., 180 degrees). The electronic device assigns an available area 910 of the foldable display to the first application in the first state 901. The electronic device displays an execution screen (e.g., a video playback screen) of the first application in the available area 910. The electronic device is configured to output a notification 911 (e.g., a message reception notification) for the second application (e.g., a messaging application) in the first state 901.

The state of the electronic device may change from the first state 901 to a second state 902 in which the folding angle is a second angle (e.g., 150 degrees) within a threshold time from the output of the notification 911. In the second state 902, the electronic device displays a window including the execution screen (e.g., a message view screen) of the second application in a second area 921 of the foldable display. The electronic device overlays the window including the execution screen of the second application on the execution screen of the first application displayed in an available area of the foldable display.

The state of the electronic device may change from the second state 902 to a third state 903. For example, the third state 903 may be a state in which the folding angle is 120 degrees. In the third state 903, the electronic device expands the second area to display the execution screen of the second application from the area 921 to an area 931. The electronic device displays a window including the execution screen of the second application in the expanded second area 931 in the third state 903.

The state of the electronic device may change from the third state 903 to a fourth state 904 in which the folding angle is a third angle (e.g., 120 degrees). In the fourth state 904, the electronic device expands the second area to display the execution screen of the second application from the area 931 to an area 941. In the fourth state 904, the electronic device displays a window including the execution screen (e.g., the execution screen including a partial execution screen to view messages and a partial execution screen to write a message) of the second application in the expanded second area 941.

FIG. 10 is a diagram illustrating an example of an operation of displaying an execution screen of an application by an electronic device in response to a change in the folding angle when a notification for a second application is output while displaying execution screens of a plurality of applications.

An electronic device (e.g., the electronic device 101 of FIG. 1, the electronic device 200 of FIGS. 2A to 2D, or the electronic device 300 of FIGS. 3A to 3D) is configured to output a notification for a second application while displaying execution screens of a plurality of applications. The electronic device may display the execution screens of the plurality of applications and the execution screen of the second application based on a change in the folding angle.

Referring to FIG. 10, the electronic device displays execution screens of a plurality of applications while the folding angle is a first angle (e.g., 120 degrees). For example, in a first state 1001 in which the folding angle is the first angle (e.g., 120 degrees), the electronic device displays a video call screen of a call application in an area 1011 and displays a memo writing screen of a memo application in an area 1012. The electronic device is configured to output a notification 1013 (e.g., a message reception notification) for the second application (e.g., a messaging application) while displaying the execution screens of the plurality of applications.

The state of the electronic device may change from the first state 1001 to a second state 1002 in which the folding angle is a second angle (e.g., 150 degrees) within a threshold time from the output of the notification 1013. In the second state 1002, the electronic device displays an execution screen (e.g., a message view screen) of the second application in a second area 1023 of the foldable display and displays the execution screens of the plurality of applications in first areas (e.g., an area 1021 and an area 1022) of the foldable display. For example, the electronic device displays the video call screen of the call application in the area 1021 and the memo writing screen of the memo application in the area 1022.

The state of the electronic device may change from the second state 1002 to a third state 1003 in which the folding angle is a third angle (e.g., 180 degrees). In response to a change in the state of the electronic device from the second state 1002 to the third state 1003, the electronic device expands the second area to display the execution screen of the second application from the area 1023 to an area 1033. The electronic device is configured to perform a message writing function in the third state 1003. In the third state 1003, the electronic device displays the execution screen of the second application in the expanded second area 1033. The execution screen of the second application includes a partial execution screen to view messages and a partial execution screen to write a message. The partial execution screen to write a message includes an interfacing object corresponding to a keyboard to obtain an input from a user.

The electronic device displays the execution screens of the plurality of applications in the expanded second area 1033 and first areas (e.g., an area 1031 and an area 1032). For example, the electronic device displays the video call screen of the call application in the area 1031 and the memo writing screen of the memo application in the area 1032.

FIG. 11 is a block diagram of an electronic device.

An electronic device 1100 (e.g., the electronic device 101 of FIG. 1, the electronic device 200 of FIGS. 2A to 2D, or the electronic device 300 of FIGS. 3A to 3D) includes a hinge 1110 configured to allow the electronic device to be folded or unfolded, a foldable display 1120 (e.g., the display 250 of FIGS. 2A to 2D) disposed on at least one side of the electronic device 1100 so that the electronic device 1100 may be folded or unfolded about the hinge 1110, a sensor module 1130 (e.g., including at least one sensor) configured to detect a state (e.g., an unfolded state, a partially unfolded intermediate state, or a folded state) of the electronic device 1100, a processor 1140 (e.g., including processing circuitry) configured to control a screen to be displayed through the foldable display 1120 according to the state of the electronic device 1100, and an input module 1150 (e.g., the input module 150 of FIG. 1).

The processor 1140 includes a variety of processing circuity, and is configured to determine the state of the electronic device 1100 to be one of the unfolded state corresponding to the unfolded state of the foldable display 1120, the partially unfolded intermediate state corresponding to the state in which the foldable display 1120 forms a folding angle within a predefined folding angle range, and the folded state corresponding to the folded state of the foldable display 1120.

The hinge 1110 allows the electronic device 1100 to be folded or unfolded, and as the electronic device 1100 is folded or unfolded about the hinge 1110, the foldable display 1120 may also be folded or unfolded. The foldable display 1120 is disposed on at least one side of the electronic device 1100, and includes a first area 1121 (e.g., the first area 251 of FIGS. 2A to 2D) disposed on one side of the hinge 1110 and a second area 1123 (e.g., the second area 252 of FIGS. 2A to 2D) disposed on the other side of the hinge 1110.

The sensor module 1130 (e.g., the sensor module 176 of FIG. 1) includes at least one sensor, and is configured to detect the folding angle (e.g., the folding angle θ of FIGS. 3A, 3B, 3C, and 3D) of the electronic device 1100. The sensor module 1130 according to an embodiment may be a Hall sensor, an acceleration sensor, and/or a gyro sensor (e.g., a gyroscope) configured to detect the folding angle of the electronic device 1100. The sensor module 1130 according to an embodiment may be disposed inside the hinge 1110 to detect the folding angle by detecting the number of gear rotations. The sensor module 1130 according to an embodiment is configured to detect not only the folding angle but also the timepoint at which folding starts and the angle at which folding stops.

For example, the sensor module 1130 may be a Hall sensor. The Hall sensor may be a transducer means for generating an electrical signal (e.g., a voltage) in response to a magnetic field. The Hall sensor may generate an electrical signal of a relatively high intensity when the magnetic field is strong, and generate an electrical signal of a relatively low intensity when the magnetic field is weak. The Hall sensor may be positioned in a first housing structure (e.g., the first housing structure 210 of FIGS. 2A to 2D), and an element (e.g., a magnetic body) to generate a magnetic field may be positioned in a second housing structure (e.g., the second housing structure 220 of FIGS. 2A to 2D). Depending on the implementation, the Hall sensor may be positioned in the second housing structure, and the magnetic body may be positioned in the first housing structure. When the electronic device 1100 changes from the fully unfolded state to the folded state, the Hall sensor may be close to the magnetic body and detect the folded state of the foldable display 1120 in response to the magnetic field of the magnetic body. In addition, the Hall sensor may detect the folding angle through the strength of an electrical signal generated in response to the magnetic field.

The Hall sensor is merely an example of the sensor module 1130, and the sensor module 1130 is not limited to the Hall sensor. The folding angle of the electronic device 1100 may be detected using a magnetic (geomagnetic) sensor and a Hall sensor. For example, the magnetic (geomagnetic) sensor and the Hall sensor may include a transmitter configured to generate a magnetic field of a predetermined frequency and a receiver configured to receive the magnetic field generated by the transmitter, and may detect the folding angle based on a change in the state of the electronic device 1100. For example, the magnetic (geomagnetic) sensor may measure an azimuth using a magnetic field and magnetic force lines, and the Hall sensor may detect a change in the state of the electronic device 1100 by detecting the strength of the magnetic field and detect the folding angle (e.g., the folding angle θ of FIGS. 3A, 3B, 3C, and 3D) according to the detected change in the state.

It is described above that the sensor module 1130 detects the folded state of the foldable display 1120 and detects the folding angle. However, according to an embodiment, the processor 1140 is configured to detect the folded state of the foldable display 1120 based on a sensing result from the sensor module 1130 and calculate the folding angle. For example, the processor 1140 is configured to receive an electrical signal based on a magnetic field detection from the Hall sensor. The processor 1140 is configured to detect the folded state of the foldable display 1120 by receiving the electrical signal from the Hall sensor. In addition, the processor 1140 may calculate the folding angle of the foldable display 1120 based on the strength of the electrical signal received from the Hall sensor.

The processor 1140 may calculate at least one of the velocity or acceleration at which the state of the electronic device 1100 changes through the folding angle.

For example, the processor 1140 may calculate the instantaneous angular velocity of the folding angle in response to the state of the electronic device changing to an intermediate state in which the electronic device is folded at a threshold folding angle (e.g., 45 degrees). For example, in response to the state of the electronic device changing to the intermediate state in which the electronic device is folded at the threshold folding angle (e.g., 45 degrees), the processor 1140 may calculate the average angular velocity of the folding angle during a time for which the state of the electronic device is an intermediate state in which the electronic device is folded at a folding angle belonging to a threshold angle range (e.g., from 45 degrees to 90 degrees).

For example, the processor 1140 may calculate the instantaneous angular acceleration of the folding angle in response to the state of the electronic device 1100 changing to an intermediate state in which the electronic device is folded at a threshold folding angle (e.g., 45 degrees). For example, in response to the state of the electronic device 1100 changing to the intermediate state in which the electronic device is folded at the threshold folding angle (e.g., 45 degrees), the processor 1140 may calculate the average angular acceleration of the folding angle during a time for which the state of the electronic device is an intermediate state in which the electronic device is folded at a folding angle belonging to a threshold angle range (e.g., from 45 degrees to 90 degrees).

The electronic device may be one of various types of electronic devices. The electronic device may comprise, for example, a portable communication device (e.g., a smartphone), a computer device, a portable multimedia device, a portable medical device, a camera, a wearable device, or a home appliance device. According to an embodiment of the disclosure, the electronic devices are not limited to those described above.

With regard to the description of the drawings, similar reference numerals may be used to refer to similar or related components. It is to be understood that a singular form of a noun corresponding to an item includes one or more of the things, unless the relevant context clearly indicates otherwise. As used herein, "A or B", "at least one of A and B", "at least one of A or B", "A, B or C", "at least one of A, B and C", and "at least one of A, B, or C", each of which includes any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit.

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

Methods according to various embodiments of the disclosure may be included and provided in a computer program product. The computer program product may be traded as a product between a seller and a buyer. The computer program product may be distributed in the form of a machine-readable storage medium (e.g., compact disc read only memory ), or be distributed (e.g., downloaded or uploaded) online via an application store (e.g., PlayStore^{™}), or between two user devices (e.g., smart phones) directly. If distributed online, at least portion of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The units described herein may be implemented using a hardware component, a software component and/or a combination thereof. A processing device may be implemented using one or more general-purpose or special-purpose computers, such as, for example, a processor, a controller and an arithmetic logic unit, a digital signal processor , a microcomputer, a field-programmable gate array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. **In** addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory random access memory , flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

## Claims

1. An electronic device (101;200;300;1100) comprising:
a foldable display (160;250;330;1120);
a processor (120;1140); and
a memory (130) configured to store instructions, wherein
the instructions, when executed by the processor (120;1140), cause the electronic device (101;200;300;1100) to:
display an execution screen of a first application when a folding angle of the foldable display (160;250;330;1120) is a first angle,
output a notification (511a;511b;611;711;911;1013) for a second application when displaying the execution screen of the first application,
display an execution screen of the second application associated with the notification (511a;511b;611;711;911;1013) in a second area of the foldable display (160;250;330;1120), based on the folding angle of the foldable display (160;250;330;1120) changing from the first angle to a second angle when outputting the notification (511a;511b;611;711;911;1013),
display the execution screen of the first application in a first area, different from the second area, of the foldable display (160;250;330;1120), and
perform a function of the second application based on the folding angle changing from the second angle to a third angle.

2. The electronic device (101;200;300;1100) of claim 1, wherein the instructions, when executed by the processor (120;1140), cause the electronic device (101;200;300; 100) to:
stop displaying the execution screen of the first application based on detecting an input from a user for the output notification (511a;511b;611;711;911;1013), and
display the execution screen of the second application associated with the notification (511a;511b;611;711;911;1013) in the first area and the second area of the foldable display (160;250;330;1120).

3. The electronic device (101;200;300;1100) of any claim 1 or claim 2, wherein the instructions, when executed by the processor (120;1140), cause the electronic device (101;200;300;1100) to:
expand the second area assigned to the second application based on the folding angle changing from the second angle to the third angle, and
display the execution screen of the second application in the expanded second area.

4. The electronic device (101;200;300;1100) of any one of claims 1 to 3, wherein the function comprises displaying an interfacing object to obtain a user input through the foldable display (160;250;330;1120).

5. The electronic device (101;200;300;1100) of any one of claims 1 to 4, wherein the instructions, when executed by the processor (120; 1140), cause the electronic device (101;200;300; 1100) to:
stop displaying the execution screen of the second application in the second area based on the folding angle changing from the second angle or the third angle to the first angle, and
display the execution screen of the first application in the second area.

6. The electronic device (101;200;300;1100) of any one of claims 1 to 5, wherein the instructions, when executed by the processor (120;1140), cause the electronic device (101;200;300;1100) to:
stop displaying the execution screen of the first application in the first area based on the folding angle changing from the third angle to a fourth angle, and
display the execution screen of the second application in the first area.

7. The electronic device (101;200;300;1100) of any one of claims 1 to 6, wherein the instructions, when executed by the processor (120; 1140), cause the electronic device (101;200;300;1100) to:
maintain outputting the notification (511a;511b;611;711;911; 1013) based on obtaining a holding input (813) from a user for the notification (511a;511b;611;711;911;1013) of the second application,
obtain a release input (824) from the user for the notification (511a;511b;611;711;911;1013), and
display the execution screen of the second application based on the obtained release input (824).

8. The electronic device (101;200;300;1100) of any one of claims 1 to 7, wherein the instructions, when executed by the processor (120;1140), cause the electronic device (101; 200; 300; 1100) to:
display a graphic object corresponding to the notification (511a;511b 611;711;911;1013) in a first graphical representation, and
display the graphic object in a second graphical representation (823) changed from the first graphical representation (811), while maintaining outputting the notification (511a;511b;611;711;9111013) based on a holding input (813).

9. The electronic device (101; 200;300;1100) of any one of claims 1 to 8, wherein the instructions, when executed by the processor (120;1140), cause the electronic device (101;200;300;1100) to:
overlay a window comprising the execution screen of the second application on the execution screen of the first application based on the folding angle being the second angle.

10. The electronic device (101;200;300;1100) of any one of claims 1 to 9, wherein the instructions, when executed by the processor (120; 1140), cause the electronic device (101;200;300;1100) to:
determine at least one of the first area to display the execution screen of the first application or the second area to display the execution screen of the second application, of the foldable display (160;250;330;1120), based on a property of the execution screen of the first application or the execution screen of the second application.

11. The electronic device (101;200;300;1100) of any one of claims 1 to 10, wherein the instructions, when executed by the processor (120;1140), cause the electronic device (101;200;300;1100) to:
display respective execution screens of a plurality of applications while the folding angle is the first angle, and
output the notification (511a;511b;611;711;911; 1013) for the second application while displaying the execution screens of the plurality of applications, and
display the execution screens of the plurality of applications in the first area.

12. The electronic device (101; 200;300;1100) of any one of claims 1 to 11, wherein the second angle has a value between the first angle and the third angle.

13. A method, performed by an electronic device, comprising:
displaying an execution screen of a first application when a folding angle of a foldable display is a first angle (410);
outputting a notification for a second application when displaying the execution screen of the first application (420);
displaying an execution screen of the second application associated with the notification in a second area of the foldable display, based on the folding angle of the foldable display changing from the first angle to a second angle when outputting the notification (430);
displaying the execution screen of the first application in a first area, different from the second area, of the foldable display(440); and
performing a function of the second application based on the folding angle changing from the second angle to a third angle (450).

14. The method of claim 13, comprising further steps as performed by the electronic device of any one of claims 1 to 12

15. A non-transitory computer-readable storage medium storing instructions that, when executed by a processor, cause the processor to perform the method of claim 13 or 14.
